# EUROPEAN PATENT SPECIFICATION

(11) **EP 1 642 045 B1**
(45) Date of publication and mention of the grant of the patent: **21.07.2010**
(21) Application number: 04739940.7
(22) Date of filing: 16.06.2004
(51) Int. Cl.: F16H 37/04

(54) **A SPEED REDUCER**
UNTERSETZUNGSGETRIEBE
REDUCTEUR DE VITESSE

(30) Priority: 03.07.2003 IT PD20030151
(43) Date of publication of application: 05.04.2006
(73) Proprietor: PIV POSIPLAN S.R.L., 35040 Piacenza D'Adige PD (IT)
(72) Inventor: CASAROTTO, Giorgio, I-45021 Badia Polesine (IT)
(74) Representative: Fabris, Stefano
(86) International application number: PCT/EP2004/006473
(87) International publication number: WO 2005/003594

(56) References cited:
- EP-A- 1 170 528
- WO-A-01/11266
- DE-A- 2 707 699
- GB-A- 1 495 087

## Description

The present invention relates to a speed reducer according to the preamble to main Claim 1.

### Technological background

The invention applies particularly to the specific field of speed reducers comprising at least three reduction stages of which the first is constituted by a pair of perpendicular gears, the second by an epicyclic reduction unit, and the third by a pair of parallel annular gears, the whole forming a reducer with an input and an output which are perpendicular to one another.

The term "reducer" is used in this context in its most general meaning of a transmission member which can operate both in a multiplying condition and in a reducing condition between a main drive-input shaft and a main drive-output shaft.

In the specific constructional implementation of reducers of the type indicated, the drive is brought to the sun gear of the epicyclic reduction unit by means of a shaft which extends through the hollow pinion of the final pair of annular gears. This particular configuration is not the subject of this patent since it is already known and described in Italian patent No. 1307377.

### Disclosure of the invention

The main object of the present invention is to provide a reducer with perpendicular axes which has particularly small transverse dimensions and which at the same time involves greater constructional simplification than known solutions.

This object is achieved by the invention by means of a speed reducer of the above-mentioned type, formed in accordance with the appended claims.

### Brief description of the drawings

The characteristics and the advantages of the invention will become clearer from the detailed description of two preferred embodiments thereof which are described by way of non-limiting example with reference to the appended drawings, in which:
- Figure 1 is a schematic view, in axial section, of a speed reducer formed in accordance with a first embodiment of the present invention, and
- Figure 2 is a schematic view, in axial section, of a second embodiment of the reducer according to the invention.

### Preferred embodiments of the invention

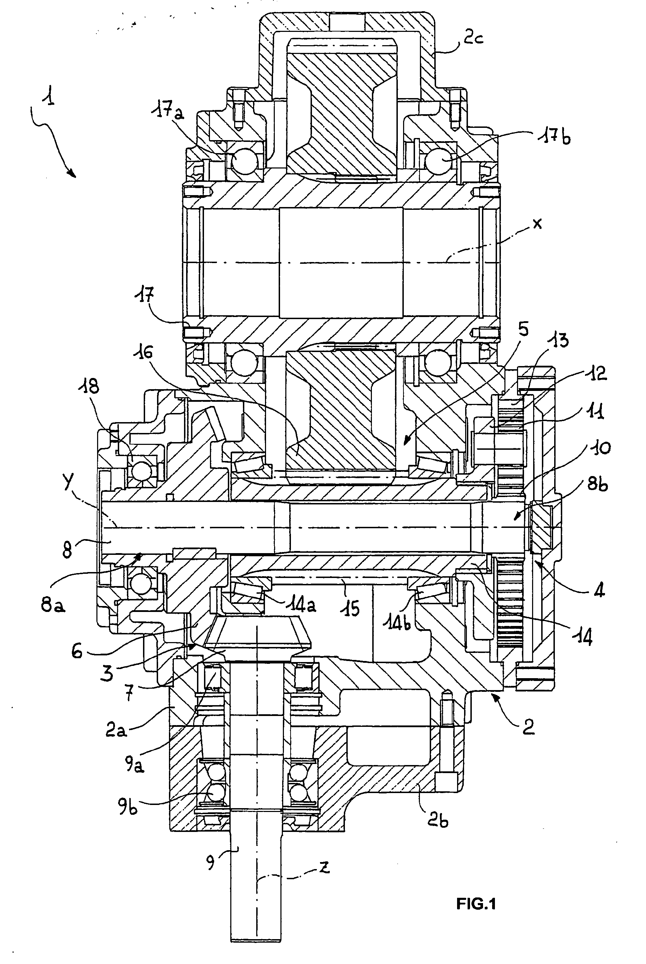

With initial reference to Figure 1, a speed reducer formed in accordance with the invention and generally indicated 1 comprises a housing 2 inside which a first, a second, and a third reduction stage, indicated 3, 4 and 5, respectively, are housed at least partially.

The housing 2 comprises structurally independent portions 2a, 2b and 2c which can be connected to one another releasably to define the housing 2 for containing the reduction stages.

The first reduction stage 3 comprises a pair of gears 6, 7 which have perpendicular axes arranged on axes Y, Z, respectively, and which are advantageously produced in the form of a bevel gear and a pinion, respectively, meshed with one another and keyed to respective shafts 8, 9.

The shaft 9 constitutes the main drive-input shaft of the reducer 1 and is supported by bearings 9a, 9b.

The bevel gear 6 is fixed for rotation with the shaft 8 about the axis Y by means of a firm coupling, for example, an interference coupling, at one end 8a of the shaft 8. The shaft 8 is also arranged to be rendered perfectly coaxial with the bevel gear 6 by suitable centring means formed in the mutually coupled members.

The shaft 8 constitutes the drive-input shaft of the second reduction stage 4. This stage comprises an epicyclic reducer with a sun gear 10 which is fixed firmly to the end 8b of the shaft 8 axially remote from the end 8a, for example, by being produced integrally therewith or by keying. The sun gear 10 is meshed with a plurality of planetary gears 11 which are mounted on a spider 12 in conventional manner and also mesh with a ring gear 13 fixed to the housing 2. The spider 12 in turn is coupled for rotation with a drive-input shaft 14 of the third stage. The shaft 14 is supported in the housing 2 by bearings 14a, 14b provided at its opposite axial ends. A pinion 15 is fixed for rotation with the shaft 14, for example, by being produced integrally therewith. The pinion 15 in turn meshes with an annular gear 16 keyed to a respective shaft 17. The shaft 17 is supported for rotation in the housing 2 about its own axis of rotation X by means of respective bearings 17a, 17b. It constitutes the main drive-output shaft of the reducer 1 and is hollow to permit hollow-shaft coupling with the driven shafts disposed downstream of the reduction unit, if desired.

It is pointed out that the shaft 14 is hollow axially and the drive-input shaft 8 of the second epicyclic reduction stage is housed therein with ample radial clearance.

According to a principal characteristic of the invention, the bevel gear 6 is supported rotatably in the housing 2 at a pair of support points at the first of which, in the region of the end 8a of the shaft 8, a bearing 18, preferably of the rolling type, is provided. The second support point of the gear 6, together with the shaft 8, is formed by the self-centring supporting effect produced on the sun gear 10 by the planetary gears 11 that are meshed with the sun gear. By virtue of this self-centring supporting effect, which is typical of epicyclic reduction units, the second support point in the region of the end 8b of the shaft 8 does not require the provision of any bearing-type support means or a respective housing seat in the housing 2; this has the advantage of a reduced transverse dimension and a considerable constructional simplification. To ensure adequate support of the bevel gear 6, this gear 6 is arranged to be connected rigidly to the shaft 8, for example, by the interference fixing described above.

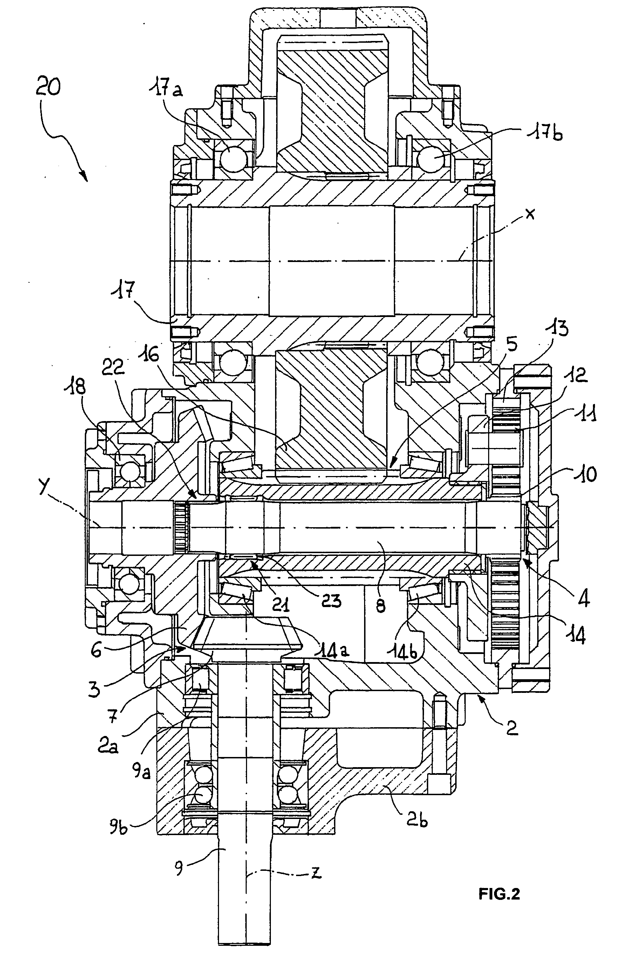

Figure 2 shows a second embodiment of a reducer according to the present invention. The reducer of the second embodiment is generally indicated 20 and details similar to those of the previous embodiment are marked by the same reference numerals.

The reducer 20 differs from the reducer 1 of the first embodiment in that the bevel gear 6, together with the drive-input shaft 8 of the epicyclic reduction stage, is further supported at a third point by a support, preferably of the rolling type, in which a bearing 21 is provided. The bearing 21 is arranged axially in a position between the bearing 18 and the support zone in the region of the sun gear 10.

Moreover, the bearing 21 is interposed radially between the hollow shaft 14 and the shaft 8 and is preferably housed in the axial cavity defined inside the shaft 14. This solution can advantageously be adopted when the self-centring effect of the sun gear 10 is not of sufficient magnitude.

In this variant of the invention, the bevel gear 6 is also advantageously arranged to be fixed for rotation with the shaft 8 about the axis Y by means of a torsional coupling, for example, of the type with a splined profile 22 and in any case such as to ensure the concentricity of the coupling. This coupling is formed in the axial portion that is disposed between the support bearings 18 and 21. The bearing 21 advantageously comprises rolling bodies of the needle type 23 and, again in order to reduce transverse dimensions, the needle races may be formed directly on (facing) internal and external surface portions of the shafts 14 and 8, respectively.

The concentric arrangement of the bearings 21 and 14a is also pointed out. In practice, the shaft 8 is supported by the stationary portion of the housing 2 by means of the pair of concentric bearings 14a, 21. As a result, the bevel gear 6 is also supported at a pair of opposed points located in the regions of the bearings 18 and 21. This supporting effect advantageously allows the bearing 18 to be of small dimensions since it is assisted by the bearing 21, acting as a second support. Moreover, since the bearing 21 is housed inside the pinion 15, the transverse dimensions are significantly reduced and considerably less than they would be if a second bearing were provided, mounted conventionally with a suitable housing formed in the stationary structure of the reducer housing. The advantage connected with greater simplification of construction (and of the number of components) in comparison with conventional configurations should also be noted.

The invention thus achieves the object proposed, affording the advantages indicated over known solutions.

## Claims

1. A speed reducer comprising at least a first (3), a second (4), and a third (5) reduction stage, arranged in cascade,
- the first stage (3) comprising a pair of gears (6, 7) with perpendicular axes,
- the second stage (4) comprising an epicyclic reduction unit with a sun gear (10) and respective planetary gears (11) kinematically connected thereto,
- the third stage (5) comprising a pair of gears (15, 16) with parallel axes,
the drive-input shaft (9) of the first stage (3) and the drive-output shaft (17) of the third stage (5) constituting the drive-input and drive-output shafts of the reducer, respectively, and
the drive-input shaft (14) of the third stage (5) being hollow and housing coaxially the drive-input shaft (8) of the second, epicyclic reduction stage (4), **characterized in that** the drive-input and drive-output shafts having respective perpendicular axes, the first reduction stage (3) comprising a bevel-gear/pinion pair (6, 7), the bevel gear (6) being fixed firmly for rotation with the drive-input shaft (8) of the second stage, at the end axially remote from the position of mounting of the second reduction stage, the bevel gear (6) being supported rotatably in the reducer at a pair of support points, bearing-type support means (18) are provided at one of the support points, the bevel gear (6) being supported at the other support point by the self-centring supporting effect produced on the sun gear (10) by the epicyclic reduction unit, the sun gear (10)being restrained coaxially on the drive-input shaft (8) of the second stage, at the end axially remote from the position of mounting of the bevel gear (6).

2. A reducer according to Claim 1 in which the bevel gear (6) of the first reduction stage (3) is connected rigidly to the drive-input shaft (8) of the second, epicyclic reduction stage (4).

3. A reducer according to Claim 1 in which the bevel gear (6), together with the drive-input shaft (8) of the second reduction stage (4), is further supported at a third support point at which second bearing-type support means (21) are provided, interposed between the drive-input shaft (8)of the second reduction stage (4) and the hollow drive-input shaft (14) of the third reduction stage (5).

4. A reducer according to Claim 3 in which the second support means (21) are disposed axially in a position between the first support means and the support point in the region of the sun gear (10).

5. A reducer according to Claim 3 or Claim 4 in which the second bearing-type support means (21) are housed in the axial cavity of the hollow drive-input shaft (14) of the third reduction stage (5).

6. A reducer according to one or more of Claims 3 to 5 in which respective portions of the outer surface of the drive-input shaft (8) of the second stage (4) and of the internal surface of the hollow drive-input shaft (14) of the third reduction stage (5), which face one another, constitute respective races for rolling bodies of the second bearing-type support means (21).

7. A reducer according to Claim 6 in which the second support means (21) comprise rolling bodies (23) of the needle type.

8. A reducer according to one or more of Claims 3 to 7 in which the drive-input shaft (8) of the second reduction stage (4) is fixed firmly for rotation with the bevel gear (6) by torsional coupling means.

9. A reducer according to Claim 8 in which the torsional coupling means comprise a coupling with a splined profile (22).

10. A reducer according to Claim 9 in which the coupling with a splined profile (22) is provided axially in a position between the support points relating to the first (18)and second support means (21).

## Patentansprüche

1. Untersetzungsgetriebe mit mindestens einer ersten (3), einer zweiten (4) und einer dritten (5) Reduktionsstufe, die kaskadenförmig angeordnet sind,
- wobei die erste Stufe (3) ein Zahnradpaar (6, 7) mit senkrechten Achsen aufweist,
- wobei die zweite Stufe (4) ein epizyklisches Untersetzungsgetriebe mit einem Sonnenrad (10) und jeweiligen Planetenrädern (11) aufweist, die kinematisch damit verbunden sind,
- wobei die dritte Stufe (5) ein Zahnradpaar (15, 16) mit parallelen Achsen aufweist,
wobei die Antriebswelle (9) der ersten Stufe (3) und die Abtriebswelle (17) der dritten Stufe (5) die Antriebswelle bzw. die Abtriebswelle des Untersetzungsgetriebes bilden, wobei die Antriebswelle (14) der dritten Stufe (5) hohl ist und die Antriebswelle (8) der zweiten epizyklischen Reduktionsstufe (4) koaxial aufnimmt, **dadurch gekennzeichnet, dass** die Antriebswelle und die Abtriebswelle jeweils senkrechte Achsen besitzen, wobei die erste Reduktionsstufe (3) ein Kegelrad-/Ritzel-Paar (6, 7) aufweist, wobei das Kegelrad (6) zur Drehung mit der Antriebswelle (8) der zweiten Stufe fest verbunden ist, und zwar an dem Ende, das axial von der Position der Befestigung der zweiten Reduktionsstufe entfernt ist, wobei das Kegelrad (6) an einem Paar von Haltepunkten drehbar in dem Untersetzungsgetriebe gelagert ist und lagerförmige Halteelemente (18) an einem der Haltepunkte angebracht sind, wobei das Kegelrad (6) an dem anderen Haltepunkt durch den selbstzentrierenden Halteeffekt gehalten wird, der durch das epizyklische Untersetzungsgetriebe an dem Sonnenrad (10) erzeugt wird, wobei das Sonnenrad (10) an der Antriebswelle (8) der zweiten Stufe koaxial festgehalten wird, und zwar an dem Ende, das axial von der Position der Befestigung des Kegelrades (6) entfernt ist.

2. Untersetzungsgetriebe nach Anspruch 1, bei dem das Kegelrad (6) der ersten Reduktionsstufe (3) starr mit der Antriebswelle (8) der zweiten epizyklischen Reduktionsstufe (4) verbunden ist.

3. Untersetzungsgetriebe nach Anspruch 1, bei dem das Kegelrad (6) zusammen mit der Antriebswelle (8) der zweiten Reduktionsstufe (4) an einem dritten Haltepunkt, an dem zweite lagerförmige Halteelemente (21) bereitgestellt sind, weiter abgestützt wird, wobei diese lagerförmigen Halteelemente zwischen der Antriebswelle (8) der zweiten Reduktionsstufe (4) und der hohlen Antriebswelle (14) der dritten Reduktionsstufe (5) eingeschoben sind.

4. Untersetzungsgetriebe nach Anspruch 3, bei dem die zweiten Halteelemente (21) axial in einer Position zwischen den ersten Halteelementen und dem Haltepunkt in dem Bereich des Sonnenrades (10) angeordnet sind.

5. Untersetzungsgetriebe nach Anspruch 3 oder Anspruch 4, bei dem sich die zweiten lagerförmigen Halteelemente (21) in dem axialen Hohlraum der hohlen Antriebswelle (14) der dritten Reduktionsstufe (5) befinden.

6. Untersetzungsgetriebe nach einem oder mehreren der Ansprüche 3 bis 5, bei dem jeweilige Abschnitte der Außenfläche der Antriebswelle (8) der zweiten Stufe (4) und der Innenfläche der hohlen Antriebswelle (14) der dritten Reduktionsstufe (5), die einander zugewandt sind, jeweilige Laufringe für Wälzkörper bzw. Rollkörper der zweiten lagerförmigen Halteelemente (21) bilden.

7. Untersetzungsgetriebe nach Anspruch 6, bei dem die zweiten Halteelemente (21) nadelförmige Wälzkörper bzw. Rollkörper (23) aufweisen.

8. Untersetzungsgetriebe nach einem oder mehreren der Ansprüche 3 bis 7, wobei die Antriebswelle (8) der zweiten Reduktionsstufe (4) durch Torsions-Verbindungseiemente rotationsfähig fest mit dem Kegelrad (6) verbunden ist.

9. Untersetzungsgetriebe nach Anspruch 8, bei dem die Torsions-Verbindungselemente eine Verbindung mit einem Keilprofil (22) aufweisen.

10. Untersetzungsgetriebe nach Anspruch 9, bei dem die Verbindung mit einem Keilprofil (22) axial in einer Position zwischen den Haltepunkten in Bezug auf die ersten (18) und zweiten Halteelemente (21) hergestellt ist.

## Revendications

1. Réducteur de vitesse comprenant au moins un premier (3), un deuxième (4) et un troisième (5) étage de réduction, agencés en cascade, le premier étage (3) comprenant une paire d'engrenages (6, 7) avec des axes perpendiculaires, le deuxième étage (4) comprenant une unité de réduction planétaire avec un planétaire (10) et des engrenages planétaires (11) respectifs raccordés de manière cinématique à cette dernière, le troisième étage (5) comprenant une paire d'engrenages (15, 16) avec des axes parallèles, l'arbre d'entrée d'entraînement (9) du premier étage (3) et l'arbre de sortie d'entraînement (17) du troisième étage (5) constituant les arbres d'entrée d'entraînement et de sortie d'entraînement du réducteur, respectivement, et l'arbre d'entrée d'entraînement (14) du troisième étage (5) étant creux et logeant de manière coaxiale l'arbre d'entrée d'entraînement (8) du deuxième étage de réduction planétaire (4), **caractérisé en ce que** les arbres d'entrée d'entraînement et de sortie d'entraînement ont des axes perpendiculaires respectifs, le premier étage de réduction (3) comprenant une paire de roue conique / pignon (6, 7), la roue conique (6) étant fermement fixée pour la rotation avec l'arbre d'entrée d'entraînement (8) du deuxième étage, au niveau de l'extrémité axialement à distance de la position de montage du deuxième étage de réduction, la roue conique (6) étant supportée à rotation dans le réducteur au niveau d'une paire de points de support, des moyens de support de type palier (18) sont prévus au niveau de l'un des points de support, la roue conique (6) étant supportée au niveau de l'autre point de support par l'effet de support à centrage automatique produit sur le planétaire (10) par l'unité de réduction planétaire, le planétaire (10) étant retenu de manière coaxiale sur l'arbre d'entrée d'entraînement (8) du deuxième étage, au niveau de l'extrémité axialement à distance de la position de montage de la roue conique (6).

2. Réducteur selon la revendication 1, dans lequel la roue conique (6) du premier étage de réduction (3) est raccordée de manière rigide à l'arbre d'entrée d'entraînement (8) du deuxième étage de réduction planétaire (4).

3. Réducteur selon la revendication 1, dans lequel la roue conique (6) conjointement à l'arbre d'entrée d'entraînement (8) du deuxième étage de réduction (4), est en outre supportée au niveau d'un troisième point de support au niveau duquel on prévoit des seconds moyens de support de type palier (21), intercalés entre l'arbre d'entrée d'entraînement (8) du deuxième étage de réduction (4) et l'arbre d'entrée d'entraînement creux (14) du troisième étage de réduction (5).

4. Réducteur selon la revendication 3, dans lequel les seconds moyens de support (21) sont disposés de manière axiale dans une position située entre les premiers moyens de support et le point de support dans la région du planétaire (10).

5. Réducteur selon la revendication 3 ou la revendication 4, dans lequel les seconds moyens de support de type palier (21) sont logés dans la cavité axiale de l'arbre d'entrée d'entraînement creux (14) du troisième étage de réduction (5).

6. Réducteur selon une ou plusieurs des revendications 3 à 5, dans lequel les parties respectives de la surface externe de l'arbre d'entrée d'entraînement (8) du deuxième étage (4) et de la surface interne de l'arbre d'entrée d'entraînement creux (14) du troisième étage de réduction (5), qui se font face, constituent des chemins de roulement respectifs pour les corps roulants des seconds moyens de support de type palier (21).

7. Réducteur selon la revendication 6, dans lequel les seconds moyens de support (21) comprennent des corps roulants (23) de type à aiguilles.

8. Réducteur selon une ou plusieurs des revendications 3 à 7, dans lequel l'arbre d'entrée d'entraînement (8) du deuxième étage de réduction (4) est fermement fixé pour la rotation avec la roue conique (6) par des moyens de couplage à torsion.

9. Réducteur selon la revendication 8, dans lequel les moyens de couplage à torsion comprennent un couplage avec un profil cannelé (22).

10. Réducteur selon la revendication 9, dans lequel le couplage avec un profil cannelé (22) est prévu de manière axiale dans une position située entre les points de support concernant les premiers (18) et seconds moyens de support (21).
